# EUROPÄISCHE PATENTSCHRIFT

(11) **EP 0 385 187 B1**
(45) Veröffentlichungstag und Bekanntmachung des Hinweises auf die Patenterteilung: **22.06.1994**
(21) Anmeldenummer: 90102884.5
(22) Anmeldetag: 14.02.1990
(51) Int. Cl.: G21C 19/07

(54) **Brennelement-Lagergestell**
Fuel element storage rack
Râtelier de stockage pour assemblage de combustible

(30) Priorität: 01.03.1989 DE 3906492
(43) Veröffentlichungstag der Anmeldung: 05.09.1990
(73) Patentinhaber: SIEMENS AKTIENGESELLSCHAFT, 80333 München (DE)
(72) Erfinder: Blösser, Hans-Georg, Dipl.-Bauing, D-6050 Offenbacch (DE); Rudnick, Karl-Heinz, D-6072 Dreieich (DE)

(56) Entgegenhaltungen:
- EP-A- 0 175 140
- FR-A- 2 433 226
- FR-A- 2 462 767
- US-A- 4 029 968

## Beschreibung

Die Erfindung betrifft ein Brennelement-Lagergestell mit einem äußeren Rahmen, der vertikale Schächte einschließt, die dem Brennelementquerschnitt angepaßt sind und ein Raster von Brennelementpositionen bilden, wobei der Rahmen an seinem oberen Ende Transportösen aufweist und an seinem unteren Ende eine horizontale Stützplatte umfaßt, und wobei das Raster aus miteinander verschränkten Blechen besteht, die die Schächte bilden (FR-PS 2 462 767).

Bei dem aus der US-PS 40 29 968 bekannten Lagergestell der oben genannten Art sind die Schächte durch Zwischenräume distanziert, in denen Platten aus neutronenabsorbierendem Material zur Abschirmung untergebracht sind. Daraus ergibt sich ein komplizierter Aufbau, zumal die die Zwischenräume begrenzenden Wände für Seitenkräfte ausgelegt sein müssen, die z.B. bei einem Erdbeben auftreten können. Hinzu kommt noch, daß auch der Rahmen mit seiner Bauweise aus einzelnen Platten und Streben, die aufwendig miteinander verbunden werden müssen, kompliziert und teuer ist.

Durch die FR-PS 2 462 767 ist schon ein Brennelement-Lagergestell bekannt, in dem ebenfalls Trennwände zur Bildung von Schächten vorgesehen sind. Die Schächte dienen zur Aufnahme von Brennelementen. Die Trennwände sind hierbei doppelschalig ausgeführt und bestehen aus einer Vielzahl von vertikal übereinander angeordneten Leisten. Die Leisten sind miteinander verschränkt und werden durch vertikale Zuganker ineinander festgehalten. Auch diese Ausführung eines Brennelement-Lagergestells ist kompliziert und teuer und ist schon allein wegen der Vielzahl der sicher zu fixierenden Bauteile relativ störanfällig.

Gegenüber dem Bekannten liegt der Erfindung die Aufgabe zugrunde, ein Brennelementlagergestell zu schaffen, das ohne Beeinträchtigung der Strahlensicherheit und der mechanischen Festigkeit einfacher aufgebaut ist als die bekannten Brennelementlagergestelle und möglichst wenig Platz erfordert.

Erfindungsgemäß ist vorgesehen, daß der Rahmen von einem Blechmantel gebildet wird, der in seinem oberen Bereich auf mindestens das Doppelte seiner normalen Wanddicke nach außen verdickt ist und mit seiner Innenseite ein das Raster bildendes Gitter führt. Vorzugsweise weist der Blechmantel vertikale Nuten auf, und in die Nuten greift das Gitter ein. Dazu sollte die Wandstärke im unverdickten Teil des Blechmantels mindestens 5 mm betragen.

Bei der Erfindung bildet der Blechmantel einen Rahmen von einfacher Bauart, der mit seinen Innenflächen eine sichere Abstützung der Brennelemente ergibt, die durch die zu einem Gitter verschränkten Bleche geführt sind. Die Bleche, die die Schächte für die Aufnahme der Brennelemente bilden, können aus neutronenabsorbierendem Material, z.B. Borstahl bestehen, um eine gewünschte Abschirmung zu erreichen. Die dazu angewendeten Blechdicken können zugleich dafür sorgen, daß das Lagergestell versteift wird, einen genügenden Halt gegen Seitenkräfte ergibt, und zwar auch dann, wenn nicht alle Brennelementpositionen mit Brennelementen besetzt sind.

Die Bleche können Durchbrechungen aufweisen, die mit Ausnehmungen in dem Blechmantel fluchten. Mit solchen Ausnehmungen und Durchbrechungen wird ein Kühlmittelfluß ermöglicht. Alternativ kann man aber auch Durchbrechungen in der Stützplatte vorsehen, auf der die Brennelemente aufsitzen.

Die inneren Nuten können an der Oberseite des Blechmantels durch Leisten abgedeckt sein, die mit dem Blechmantel lösbar verbunden sind. Hierdurch erhält man eine Festlegung der Gitterbleche in vertikaler Richtung. Eine Festlegung der Bleche in seitlicher Richtung kann in vorteilhafter Weise dadurch erreicht werden, daß die Bleche mit ihrer Unterseite in Nuten in der Stützplatte sitzen.

Bei einer besonders vorteilhaften Ausführungsform der Erfindung ist der Gestellquerschnitt quadratisch. Er umfaßt ein Brennelementraster von höchstens 8x8 Brennelementpositionen. Dies ist ein wesentlicher Gegensatz gegenüber dem Brennelementlagergestell nach der US-Patentschrift 40 29 468, bei dem das Lagergestell einen schmalen Rechteckquerschnitt hat, in dem drei Reihen mit je 12 Brennelementpositionen in ungleichmäßigem Abstand angeordnet sind. Demgegenüber ermöglicht die erfindungsgemäße quadratische Bauform eine größere Festigkeit, so daß das Brennelementlagergestell mit seinen Transportösen auch als Ganzes in beladenem Zustand transportiert werden kann. Dies ist z.B. für den Brennelementwechsel in Siedewasserreaktoren besonders vorteilhaft, weil dann während des Wechsels nur ein relativ kurzer Weg für die einzelnen Brennelemente zurückzulegen ist, während danach der Abtransport in ein Abklingbecken mit den Lagergestellen erfolgt, so daß die Zahl der Transportvorgänge wesentlich herabgesetzt ist.

Die Stützplatte kann zur Erhöhung der Festigkeit rasterförmig verlaufende Rippen aufweisen, wobei an den Kreuzungsstellen der Rippen Fußteile angreifen können. Dabei ist es günstig, wenn die Fußteile Einschnitte entsprechend dem Verlauf der Rippen aufweisen, die die Rippen seitlich umschließen. Hierdurch wird die Festlegung in seitlicher Richtung mit denkbar geringem Aufwand erreicht. Ein weiterer Vorteil besteht darin, daß die Kräfte großflächig eingeleitet werden, so daß örtliche Überbeanspruchungen ausgeschlossen sind.

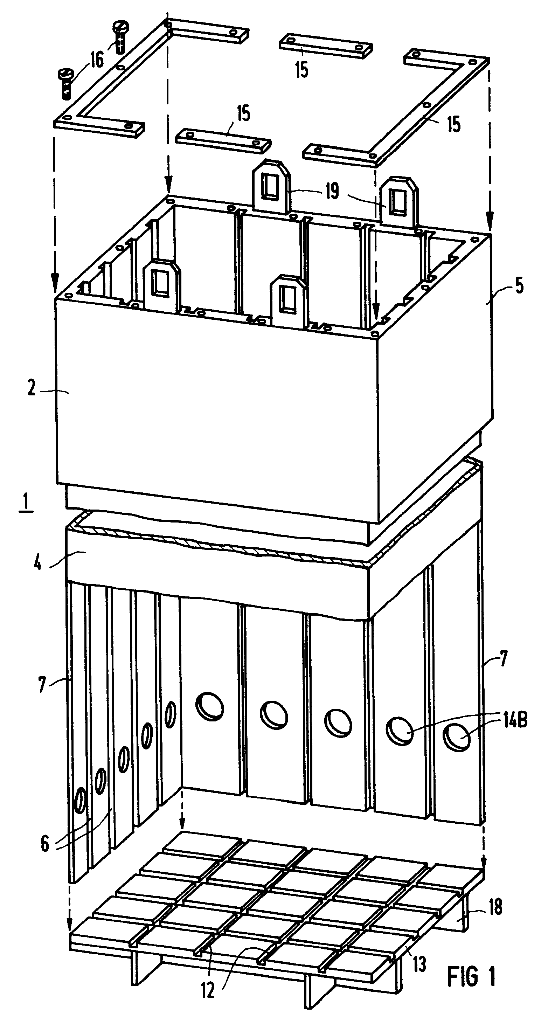

Zur näheren Erläuterung der Erfindung wird anhand der Zeichnung ein Ausführungsbeispiel beschrieben. Dabei zeigt
FIG 1 eine perspektivische Explosionsdarstellung eines Lagergestells zum Teil im Schnitt,
FIG 2 ebenfalls in perspektivischer Darstellung das zu dem Lagergestell als Einsatz gehörende Gitter und
die Figuren 3 und 4 in wesentlich verkleinerter Darstellung Seitenansichten einzelner Bleche, die das Gitter bilden.

Das als Transportkanister dienende Brennelement-Lagergestell 1 umfaßt einen Rahmen 2 und einen Gittereinsatz 3. Zum Rahmen 2 gehört ein im Querschnitt quadratischer Blechmantel 4, der aus nichtrostendem Stahl besteht. Im oberen Bereich 5 des Blechmantels 4 ist die Wandung über ca. 1/9 der Gesamthöhe von 4,5 m als Folge eines Blechstoßes ca. um das 2-fache der unteren Blechdicke von 10 mm nach außen verdickt.

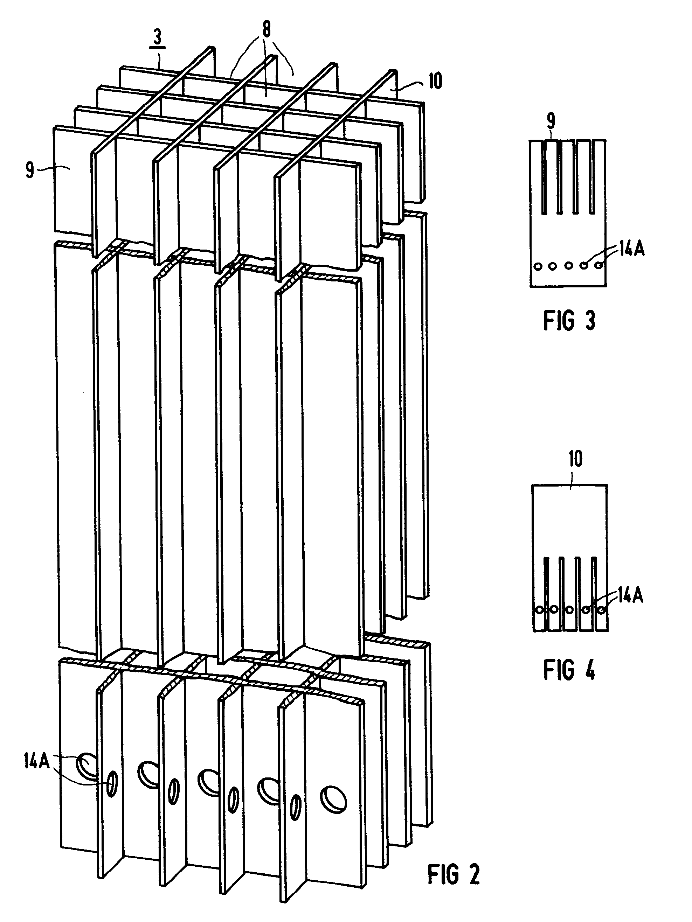

Die Seitenbleche 7 des Blechmantels 4 sind innen mit jeweils 4 durchgehenden, vertikalen Nuten 6 versehen, deren Tiefe ca. 5 mm beträgt. In die Nuten 6 werden Absorberbleche 9 und 10 des Gittereinsatzes 3 eingesteckt. Die Absorberbleche 9, 10, die im montierten Zustand das Raster für die Positionen der Brennelemente bilden, bestehen aus neutronenabsorbierendem Material (Borstahl) mit einer Dicke von 2 - 4 mm. In FIG 2 sind jeweils vier über die Hälfte ihrer Höhe geschlitzte Absorberbleche 9, 10 dargestellt, die miteinander verschränkt sind, so daß Schächte 8 zur Aufnahme der Brennelemente gebildet werden.

Der Gittereinsatz 3 wird oben in den Blechmantel 4 eingesetzt und findet seitlich in den Nuten 6 der Seitenwände 7 sowie unten in Nuten 12 einer Stützplatte 13 seine Führung.

Die Absorberbleche 9, 10 sowie die Seitenwände 7 des Blechmantels 4 sind im unteren Bereich nahe der Stützplatte 13 an allen Brennelementpositionen mit kreisförmigen Öffnungen 14A, 14B versehen, damit das Kühlwasser an die im Inneren befindlichen Brennelemente gelangen kann. Um die Absorberbleche 9, 10 im Blechmantel 4 zu fixieren, werden auf dem oberen, verdickten Teil 5 des Blechmantels 4 Haltbleche 15 mittels Senkschrauben 16 befestigt.

Auf dem Boden eines für das Abstellen der Gestelle 1 vorgesehenen, wassergefüllten Lagerbeckens sind entsprechend der Anzahl der aufzunehmenden Gestelle 1 viereckige Fußteile befestigt, in die rasterförmig angeordnete Stützrippen 18 der Stützplatte 13 eingreifen. Zu diesem Zweck haben die nicht dargestellten Fußteile vertikale, kreuzförmige Einschnitte.

Das Gestell 1 wird in bekannter Weise durch ein Hebezeug in das dafür vorgesehene Becken gehoben. Für diesen Vorgang sind am oberen Ende vier Transportösen 19 befestigt, die innerhalb des Konstruktionsquerschnittes des Blechmantels 4 liegen. Eine besondere Verriegelung des Gestells 1 in seinem Auflagepunkt ist für die dargestellte Konstruktion nicht vorgesehen.

## Patentansprüche

1. Brennelement-Lagergestell mit einem äußeren Rahmen (2), der vertikale Schächte (8) einschließt, die dem Brennelementquerschnitt angepaßt sind und ein Raster von Brennelementpositionen bilden, wobei der Rahmen (2) an seinem oberen Ende Transportösen (19) aufweist und an seinem unteren Ende eine horizontale Stützplatte (13) umfaßt, und wobei das Raster aus miteinander verschränkten Blechen (9, 10) besteht, die die Schächte (8) bilden,
**dadurch gekennzeichnet,**
daß der Rahmen (2) von einem Blechmantel (4) gebildet wird, der in seinem oberen Bereich (5) auf mindestens das Doppelte seiner normalen Wanddicke nach außen verdickt ist und mit seiner Innenseite ein das Raster bildendes Gitter (3) führt.

2. Brennelement-Lagergestell nach Anspruch 1,
**dadurch gekennzeichnet,** daß die Innenseite des Blechmantels (4) vertikale Nuten (6) aufweist, und daß in die Nuten (6) das Gitter (3) eingreift.

3. Brennelement-Lagergestell nach Anspruch 1 oder 2,
**dadurch gekennzeichnet,** daß die Bleche (9, 10) Durchbrechungen (14A) aufweisen, die mit Ausnehmungen (14B) in dem Blechmantel (4) fluchten.

4. Brennelement-Lagergestell nach Anspruch 2 oder 3,
**dadurch gekennzeichnet,** daß die Nuten (6) an der Oberseite des Blechmantels (4) durch Leisten abgedeckt sind, die mit dem Blechmantel (4) lösbar verbunden sind.

5. Brennelement-Lagergestell nach Anspruch 2, 3 oder 4
**dadurch gekennzeichnet,** daß die Bleche (9, 10) mit ihrer Unterseite in Nuten (12) in der Stützplatte (13) sitzen.

6. Brennelement-Lagergestell nach einem der Ansprüche 1 bis 5, **dadurch gekennzeichnet,** daß der Gestellquerschnitt quadratisch ist und ein Brennelementraster von höchstens 8x8 Brennelementpositionen umfaßt.

7. Brennelement-Lagergestell nach einem der Ansprüche 1 bis 6, **dadurch gekennzeichnet,** daß die Unterseite der Stützplatte (13) rasterförmig verlaufende Rippen (18) aufweist, und daß an Kreuzungsstellen der Rippen (18) Fußteile angreifen.

8. Brennelement-Lagergestell nach Anspruch 7,
**dadurch gekennzeichnet,** daß die Fußteile Einschnitte entsprechend dem Verlauf der Rippen (18) aufweisen, die die Rippen (18) seitlich umschließen.

## Claims

1. Fuel element storage rack having an outer frame (2), which encloses vertical shafts (8) which are adapted to the fuel element cross-section and form a grid of fuel element positions, in which the frame (2) has transportation loops (19) at its upper end and comprises a horizontal supporting plate (13) at its lower end and in which the grid consists of metal sheets (9, 10) which are crossed over by each other and form the shafts (8), characterised in that the frame (2) is formed by a sheet-metal casing (4) which in its upper region (5) is outwardly thickened to at least twice its normal wall thickness and with its inside guides a lattice (3) forming the grid.

2. Fuel element storage rack according to claim 1, characterised in that the inside of the sheet-metal casing (4) has vertical slots (6) and in that the lattice (3) engages into the slots (6).

3. Fuel element storage rack according to claim 1 or 2, characterised in that the metal sheets (9, 10) have openings (14A) which are in alignment with cut-outs (14B) in the sheet-metal casing (4).

4. Fuel element storage rack according to claim 2 or 3, characterised in that at the upper side of the sheet-metal casing (4) the slots (6) are covered by means of strips which are detachably connected with the sheet-metal casing (4).

5. Fuel element storage rack according to claim 2, 3 or 4, characterised in that the metal sheets (9, 10) sit with their lower side in slots (12) in the supporting plate (13).

6. Fuel element storage rack according to one of the claims 1 to 5, characterised in that the cross-section of the rack is square and embraces a fuel element grid of at most 8x8 fuel element positions.

7. Fuel element storage rack according to one of the claims 1 to 6, characterised in that the lower side of the supporting plate (13) has ribs (18) which extend in the shape of a grid and in that base portions act at points of intersection of the ribs (18).

8. Fuel element storage rack according to claim 7, characterised in that the base portions have incisions in accordance with the course of the ribs (18), which incisions laterally enclose the ribs (18).

## Revendications

1. Ratelier de stockage d'assemblages combustibles, comportant un cadre extérieur (2) qui entoure des puits verticaux (8) adaptés à la section transversale des assemblages combustibles et formant un quadrillage de positions pour assemblages combustibles, le cadre (2) ayant à son extrémité supérieure des oeillets de transport (19) et à son extrémité inférieure une plaque d'appui (13) horizontale, le quadrillage étant constituée de tôles (9, 10) imbriquées les unes avec les autres, qui forment les puits,
caractérisé en ce que
le cadre (2) est formé d'une enveloppe (4) en tôle qui est épaissie vers l'extérieur dans sa partie supérieure de façon à atteindre au moins le double de son épaisseur normale de paroi et qui guide par son côté intérieur une grille (3) formant le quadrillage.

2. Ratelier de stockage d'assemblages combustibles selon la revendication 1, caractérisé en ce que le côté intérieur de l'enveloppe (4) en tôle comporte des gorges (6) verticales et que la grille (3) pénètre dans les gorges (6).

3. Ratelier de stockage d'assemblages combustibles selon la revendication 1 ou 2, caractérisé en ce que les tôles (9, 10) présentent des découpes (14A) qui sont en alignement avec des évidements (14B) de l'enveloppe (4) en tôle.

4. Ratelier de stockage d'assemblages combustibles selon la revendication 2 ou 3, caractérisé en ce que les gorges (6) sont recouvertes, sur leur partie supérieure de l'enveloppe (4) en tôle, par des bandes qui sont reliées de façon amovible à l'enveloppe (4) en tôle.

5. Ratelier de stockage d'assemblages combustibles selon la revendication 2, 3 ou 4, caractérisé en ce que les tôles (9, 10) sont logées par leur côté inférieur dans des gorges (12) de la plaque d'appui (13).

6. Ratelier de stockage d'assemblages combustibles selon l'une des revendications 1 à 5, caractérisé en ce que la section transversale du châssis est carrée et comprend un quadrillage comportant au moins 8 X 8 positions pour assemblages combustibles.

7. Ratelier de stockage d'assemblages combustibles selon l'une des revendications 1 à 6, caractérisé en ce que le côté inférieur de la plaque d'appui (13) présente des nervures (18) formant un quadrillage et qu'au point de croisement des nervures (18) commencent des parties formant pieds.

8. Ratelier de stockage d'assemblages combustibles selon la revendication 7, caractérisé en ce que les parties formant pieds comportent des encoches conjuguées des nervures (18), qui entourent latéralement les nervures (18).
